# EUROPEAN PATENT SPECIFICATION

(11) **EP 1 507 129 B1**
(45) Date of publication and mention of the grant of the patent: **02.01.2008**
(21) Application number: 03017683.8
(22) Date of filing: 14.08.2003
(51) Int. Cl.: G01C 21/36

(54) **Computer-based system and method for outputting information to a driver of a vehicle**
Computergestütztes System und Verfahren zur Informationsausgabe an einen Fahrer eines Fahrzeuges
Méthode et système par ordinateur pour émettre des informations au conducteur d'un véhicule

(43) Date of publication of application: 16.02.2005
(73) Proprietor: Harman Becker Automotive Systems GmbH, 76307 Karlsbad (DE)
(72) Inventor: Brülle-Drews, Christian, 22159 Hamburg (DE)
(74) Representative: Bertsch, Florian Oliver

(56) References cited:
- DE-A- 10 053 315
- DE-A- 19 938 256
- US-A- 5 835 854
- US-A- 6 148 105

## Description

### Field of the invention

The invention relates to a computer-based system for outputting information to a driver of a vehicle which is adapted to be mounted in a vehicle, and to a method for outputting information to a driver of a vehicle.

### Related Art

Recently, many cars have been equipped with a computer-based system for outputting information to the driver, such as telematic systems, navigation systems or, simply, car radio receivers. The purpose of these systems is to provide information concerning the traffic situation, such as traffic congestions, road closure for traffic and the like, or travel information, such as vistas of the area, hotel information, traffic announcements and the like, in the area where the driver is currently travelling.

For example, navigation systems calculate a driving route to a destination in response to an input by the driver and output driving recommendations according to the calculated route. Car radios output traffic announcements received from broadcasting stations and can be equipped with further functions such as RDS-TMC (Radio Data System- Traffic Message Channel) or TIM (Traffic Information Memory) for storing and utilizing traffic announcements for navigation purposes. Telematic devices provide a wireless connection to, for example, the internet, for receiving further travel and traffic information and other useful services.

US 6,148,105 A discloses a portable translating machine which is a character recognizing and translating system for taking camera images of characters written on sight-seeing guide boards.

DE 199 38 256 A discloses a system for electronic identification of road signs using a camera, non-conform traffic signs being recognized by template matching.

### Summary of the invention

Despite the development of the above described systems there still remains a need for providing an improved method and a system for outputting further useful information to the driver during the drive, in particular travel and/or traffic information.

These objects are accomplished by a computer-based system and a method for outputting information to a driver of a vehicle according to claims 1 and 17, respectively.

The computer-based system according to the invention comprises a translation means having a storage means for storing a plurality of first information data and a plurality of second information data which is related to the first information data comprising a translation of the first information data, input means for inputting first information data into the computer-based system, data processing means for retrieving second information data on the basis of the input first information data from the data storage means, and output means for outputting the retrieved second information data to the driver.

The invention also provides a method for outputting information to a driver of a vehicle comprising the steps of inputting first information data into a translation means of a computer-based system which is adopted to be mounted in a vehicle, retrieving second information data from a storage means for storing a plurality of first information data and a plurality of second information data, wherein the second information data is related to the first information data comprising a translation of any of the first information data, and outputting said retrieved second information data to said driver.

### Detailed description of the invention

According to the invention, a computer-based system being mountable in a vehicle, such as a navigation system, a telematic system or any other board computer (head unit) is equipped with a translation device.

The invention exploits the fact that many vehicles already comprise a board computer used for navigation or telematic applications having a data processing performance comparable to that of a personal computer what can be utilized for implementing a translation function.

Due to fact that the computer-based system according to the invention is installed inside the vehicle it can be easily operated simultaneously with driving the vehicle, so that the driver's attention can be exclusively focussed on the surrounding traffic and driving of the vehicle. That is, mounting the system according to the invention inside the vehicle is to ensure an operation in an easy and save manner even during driving.

The system according to the invention may be a built-in system. The installation may be of the conventional type such as a plug-in box. For example the computer-based system may be arranged inside the housing of a radio receiver. It may also be mounted in a separate console. Mounting of the computer system in the vehicle may include being formed within the housing of a navigation system installed inside the vehicle. Basically, in this case the board computer of the vehicle is utilized for both functions, navigation and translation.

Due to the installation inside the vehicle, the driver is immediately capable to perform a translation without stopping the car so that the driving safety is significantly increased and the information level is enhanced without any loss of time associated with stopping the vehicle and reading a book or map or operating a laptop or any other portable computer.

Of course, the driver of the vehicle, in the sense of the invention, may also be the co-driver.

A preferred embodiment of the computer system of the invention comprises a language translation means for translating a word of a first language into a word of a second language.

Since the driver of a vehicle travelling abroad is often confronted with foreign language, the language translation means implemented in the board computer of the vehicle is useful for a large number of situations. For example, in case of an emergency it is extremely important for the driver to be able to communicate instantaneously with an emergency station for exchanging relevant information, e.g., where the accident happened, who was injured, etc. Further examples of useful applications relate to the assistance from other road users or communication at a filling station, service station or with visitors from abroad, e.g. for taxi drivers.

The language translation means of the system according to the invention may comprise an automatic language translation means for context-related translation of coherent sentences or phrases from one language into another. Since the meaning of words may be strongly dependent on context, in this case the storage means comprises additional language data serving as a data base for realizing the function of translation of coherent written or spoken text passages. The language data of the language data storage means goes beyond the data of a dictionary and comprises further data relating to a context related meaning of words and phrases.

Preferably the database comprising second information data, i.e. the translation data, may be focussed on traffic and/or travel applications so that text passages relating to the fields of traffic and travel such as traffic announcements received from broadcasting stations can be translated by the language translation means.

However, the term "translation" in the sense of the invention is not restricted to its linguistic aspect of translating words from one language into another but includes the translation of any sign or character by outputting information reflecting the meaning of the sign or character in terms of any other sign(s), character(s) or word(s).

For example, the meaning of a traffic sign which usually is only known to residents of the respective country is "translated" to a driver who is not familiar with the meaning of that traffic sign of the foreign country where he/she is currently travelling. This function is very helpful for drivers travelling in foreign countries where they are not aware of the meaning of local traffic signs and leads to a significant increase of traffic safety, particularly in countries where characters are used which differ from those of the home country of the driver, such as Japanese or Arabian characters for Europeans.

Outputting of the second information data, i.e. the translation, may be performed by outputting a description of the meaning of said traffic sign by speech and/or displaying a text and/or displaying an image of the corresponding traffic sign of the home country of the driver.

For the convenience of the driver, the input means may comprise a microphone and means for speech recognition being connected to the microphone. Furthermore, the output means may comprise means for a text-to-speech conversion of the word or the text output to the driver. It is an advantage of the invention that devices, like a speech recognition unit and/or a text-to-speech conversion unit which in many cases are already integrated equipment of a board computer such as a navigation system can be utilized for realizing a translation means which can be operated in an easy and save manner.

The input means may also comprise a keyboard, a joystick, a shaft encoder, a touch screen and/or a touchpad facilitating the operation of the computer-based system comprising the translation module by the driver while driving.

Advantageously, the input means of the language translation means comprises means for providing information from an external information source. For example, this data may relate to traffic and/or travel information. Non-limiting examples for information data received from an external information source are a traffic message received from a broadcasting station, but also an information sign or a traffic sign located at the road is to be understood as an external information source in the sense of the invention.

The means for providing traffic and/or travel information from an external information source comprises a digital photo and/or video camera for, e.g., detecting an information sign in the ambience of the vehicle.
Means for pattern recognition for analyzing an image taken by the digital photo and/or video camera may be provided that comprise means for information sign recognition for recognizing an information sign based on its external shape and dimensions.

For the determination of the position of the information sign, there may be provided a video camera for measuring the distance and the angle to a traffic sign with respect to the vehicle. Since the position of the video camera at the vehicle is known, the position of the information sign relative to the vehicle can be easily calculated from these measurements.

Since the absolute position of the vehicle and, if necessary, its advancing direction can be detected by a position determination means, such as a GPS unit and/or a gyrometer, the exact position of the detected information sign can be obtained easily according to the known principles of photogrammetry and stereo-image analysis. By comparing the determined position of the information sign and the location data of the driving route of the vehicle provided by the navigation system, it becomes possible to evaluate whether the information sign is located on the current route of the vehicle or not.

The pattern recognition means for pattern recognition may comprise means for text recognition. After the recognition of words/text of the information sign the respective words may be automatically translated by the translation means and output to the driver.

Furthermore, the pattern recognition means may comprise an identifying means for identifying a traffic sign of a country. That identifying means for identifying a traffic sign of a country includes a traffic sign image storage means for storing image elements of traffic signs of different countries to which elements of the image detected by the video camera are compared. By identifying traffic signs of foreign countries the driver is provided with important traffic information which, otherwise, he would not be able to recognize. Thereby security of driving is significantly increased.

The system according to the invention may comprise decision means for deciding whether the information sign detected by the means for information sign recognition is output to the driver or not. This function enables the driver to preset whether any information, or, for example, only a certain information, such as traffic signs, are output for his attention.

The computer-based system according to the invention may comprise setting means for setting the language of the input words or text in dependence on the position determined by the position determination means, e.g., a GPS unit.

According to another preferred embodiment of the invention, the means for providing traffic and/or travel information from an external information source comprises a radio receiver for receiving traffic or travel announcements from a broadcasting station. By outputting a translation of a traffic announcement immediately after its detection safety of driving and the information level of a driver travelling through foreign countries is further enhanced. The traffic announcements received by the radio receiver may first be stored in the computer system by the driver and translated in response to a further command input by the driver, or, alternatively, may be instantaneously translated by automatic input into the language translation means.

The method for outputting information to a driver of a vehicle preferably comprises the step of inputting information from an external information source. As mentioned above, the external information source may be an information sign located besides the road way. In this case the method according to the invention may comprise the further steps of monitoring the ambience of a vehicle by means of a video camera and continuously performing a pattern recognition of an image of the video camera for detecting an information sign.

If an information sign has been detected, as a further step an analysis of the image of the detected information sign for identifying a traffic sign of the country where the vehicle is currently travelling may be performed. Furthermore, if a traffic sign has been identified during this procedure, an image of a corresponding traffic sign of the home country of the driver or a text information reflecting the meaning of the traffic sign may be output to the driver.

The method for outputting information to a driver of a vehicle according to the invention may further comprise the steps of detecting the position of the vehicle, detecting a relative position of an information sign in the ambience of the vehicle, determining the position of the information sign from the position of the vehicle and the relative position of the information sign, comparing the position of the traffic sign and location data of the route of the vehicle and outputting a translation of the traffic sign to the driver, when the traffic sign is located on the route.

According to the method of the invention, the traffic information represented by a traffic sign may only be output to the driver if a traffic sign of a country where the vehicle is currently travelling has been identified by comparing the detected image of the information sign with the data stored in a traffic sign storage means containing traffic signs of different countries. Furthermore, the output of a translation of a text recognized by the text recognition means may be output in dependence on this result.

Additionally or alternatively, the information provided by the language translation means and/or by the traffic sign identifying means may be output in dependence on the result of the position determination of the vehicle and/or in dependence of the determination whether the traffic sign is located on the driving route of the vehicle. Thereby, the information provided to the driver may automatically be filtered on the basis of the above criteria or any other criterion, so that information not required by the individual driver is identified and prevented from being output to the driver, so that the driver's attention can be focussed on driving and the perception of relevant traffic information.

Another embodiment of the method according to the invention relates to the translation of traffic announcements received from a broadcasting station what can be performed automatically or after a respective command entered by the user, i.e., the driver. This embodiment of the method according to the invention comprises the steps of receiving first information data from a broadcasting station, performing a speech recognition analysis of said received data, translating said first information data by retrieving the related second information data, and outputting said second information data, i.e., the translation of the first information data, to the driver.

Further features and advantages of the system and the method for outputting information to a drive of a vehicle according to the invention become apparent from the following description of preferred embodiments with reference to the accompanying drawings in which
- Fig. 1: shows a schematic functional block diagram of a first embodiment of the computer-based system according to the invention having a speech recognition function and a text-to-speech conversion function,
- Fig. 2: shows a flow chart illustrating the steps of outputting information to a driver of a vehicle according to a first embodiment of the invention including input supported by speech recognition and output by text-to-speech conversion,
- Fig. 3: shows a schematic functional block diagram of a second embodiment of the computer-based system according to the invention,
- Fig. 4: shows a schematic functional block diagram of the head unit of the second embodiment of the computer-based system according to the invention shown in Fig. 3,
- Fig. 5: shows a flow chart illustrating the steps of outputting information to a driver of a vehicle according to a second embodiment of the invention including the detection and translation of an information sign,
- Fig. 6: shows a flow chart illustrating the steps of outputting information to a driver of a vehicle according to a third embodiment of the invention including the translation of a traffic sign,
- Fig. 7A: shows a situation illustrating the determination of the position of a signpost in relation to a route according to the invention,
- Fig. 7B: shows a situation illustrating the determination of the position of a signpost in relation to a road according to the invention,
- Fig. 8: shows a flow chart illustrating the steps of outputting information to the driver of a vehicle according to a third embodiment of the method of the invention including the determination of the position of an information sign according to Fig. 7A,
- Fig. 9: shows a schematic functional block diagram of a third embodiment of a computer-based system according to the invention having a function for translating a traffic announcement received from a broadcasting station, and
- Fig. 10: shows a flow chart illustrating the steps of outputting information to the driver of a vehicle according to a fourth embodiment of the invention including the translation of a traffic announcement received from a broadcasting station.

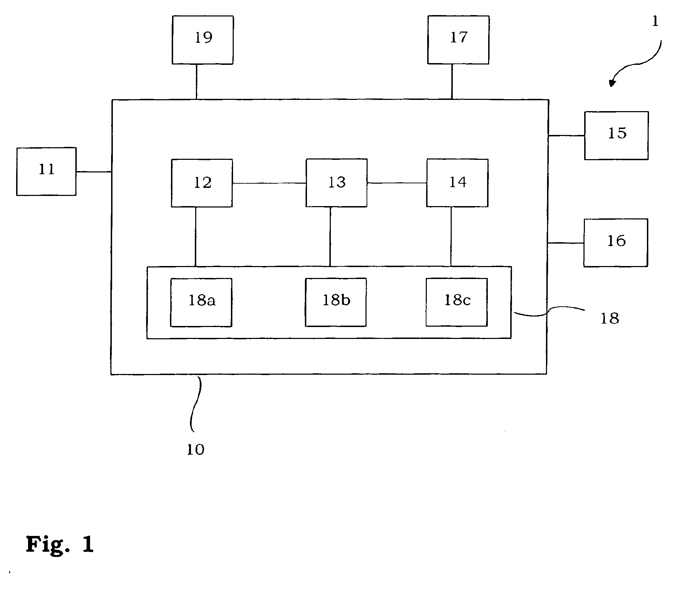

A first embodiment of a computer-based system according to the invention is shown schematically in Fig. 1. The computer system 1 comprises a head unit 10, a microphone 11, a set of loudspeakers 15, a display 16, and a control panel 17. The head unit 10 is connected to the microphone 11 for inputting words or sentences to be translated. The microphone 11 may be part of a headset or a hands-free set of a telephone.

The head unit 10 comprises a speech recognition module 12 for input of words to be translated, a translation module 13 being connected to the speech recognition module 12, and a text-to-speech module 14 for converting the translation result to speech and outputting via the loudspeaker 15 or the display 16 which are connected to the head unit 10, respectively. The speech recognition module 12, the translation module 13 and the text-to-speech synthesizer 14 are connected to a storage device 18 of the computer-based system 10 which comprises a speech recognition database 18a, a dictionary database 18b comprising data of a plurality of words and signs of at least two languages, a TSS-synthesizer database 18c and a RAM (not shown). The computer-based system 1 is connected to an ignition lock 19 for starting the engine of the vehicle.

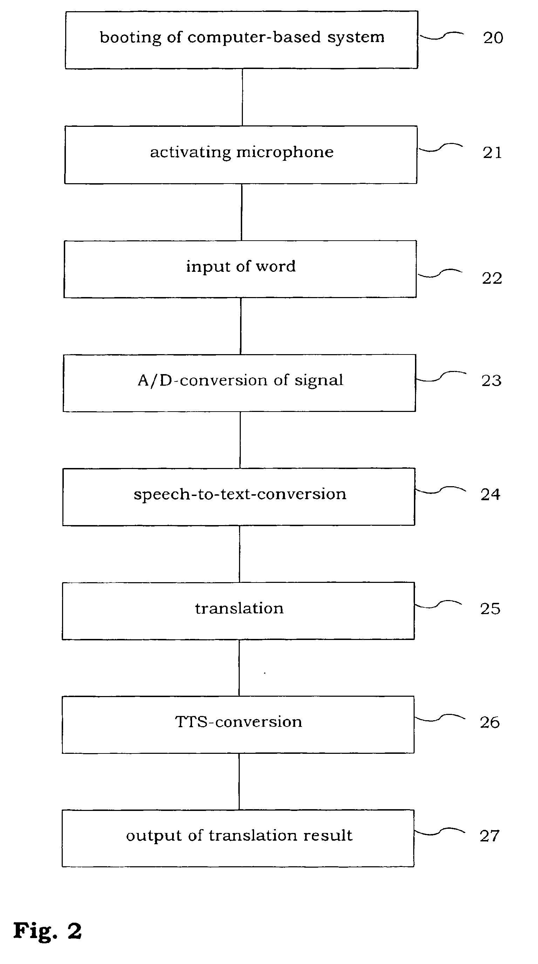

The use of the computer-based system 1 according to the first embodiment of the invention will now be described with reference to Fig. 2. In step 20 the computer-based system 10 is booted when the engine of the vehicle is started by the driver turning the ignition lock 19 by means of an ignition key. In step 21 the driver turns on the microphone 11 for speech input by entering a command via the control panel 17. In step 22 the driver inputs a word to be translated, e.g. "UNFALL", by speech input into the microphone 11. An analog-to-digital conversion of the analog audio signal into a digital signal is performed in step 23 by the speech recognition module 12.

In step 24, for deciphering the speech signal the speech recognition module 12 compares the signal with data stored in the data base 18b comprising words and/or syllables which are loaded into the RAM of the computer-based system 1. By the way, the data base 18b may be edited by the driver for increasing its recognition performance according to the known principles of speech recognition. By checking the output of the A/D-conversion against the stored patterns of the database 18b the speech input of the driver is converted to text in step 24. In step 25, after the deciphered text is transmitted to the translation module 13 the English translation "ACCIDENT" of the German word "UNFALL" is retrieved by the translation module 13 from the dictionary data base 18b. In step 26, the translation result transmitted from the translation module 13 is converted into speech by speech synthesis of the text-to-speech module 14 including natural language and digital signal processing according to the known principles of TTS synthesis. In step 27, the English translation "ACCIDENT" is output to the driver via the loudspeakers 15 and, simultaneously, on the display 16.

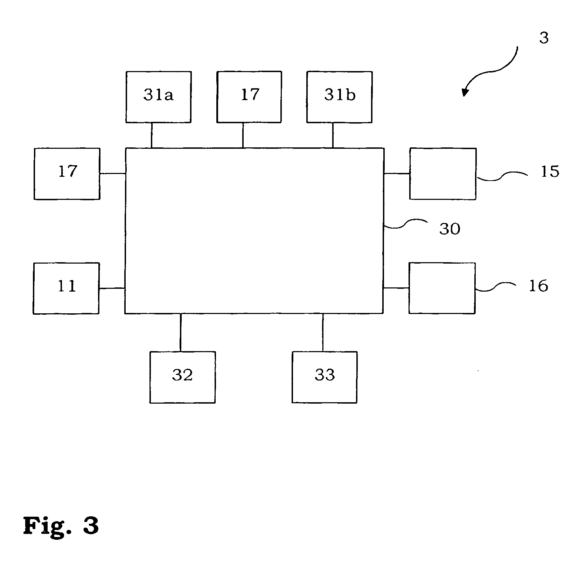

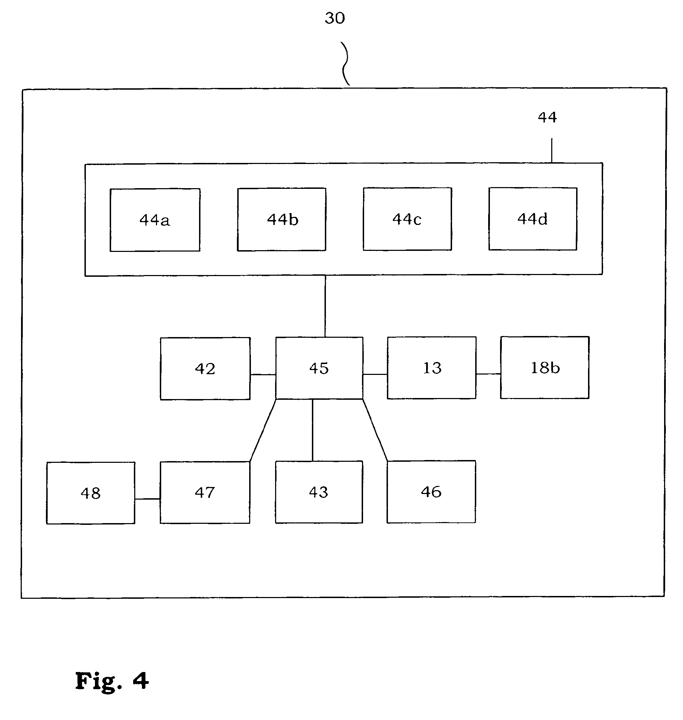

The configuration of a computer-based system 3 according to a second embodiment of the invention including digital video cameras for detecting traffic information during a trip is now explained with reference to Figures 3 and 4. As compared to the computer-based system 1 according to the first embodiment of the invention shown in Fig. 1, the computer-based system 3 shown in Fig.3 comprises a head unit 30 and, as additional components, a pair of digital video cameras 31a and 31b, a GPS-module 32 for determining the position of the vehicle and a gyrometer 33 for determining the advancing direction of the vehicle.

The head unit 30 of the computer-based system 2 according to the second embodiment is illustrated in more detail in Fig. 4. As compared to the head unit 10 of the computer based system 1 according to the first embodiment shown in Fig. 1, the head unit 30 furthermore includes a pattern recognition unit 44 for analyzing the images obtained by the digital video cameras 31a and 31b.

The pattern recognition module 44 includes a text recognition module 44a, an information sign recognition module 44b, a traffic sign identification means 44c and an information sign storage means 44d. The purpose of the information sign recognition module 44b is to analyze the image detected by the video cameras 31a,31b continuously for detecting an information sign based on its shape and dimensions. For determining whether the information sign detected by the information sign recognition module 44b is a traffic sign or not, the traffic sign identification means 44c analyzes the image of the detected information sign by comparing it to traffic signs of different countries stored in the information sign storage means 44d. The text recognition module 44a performs an image analysis in order to recognise and extract text of the information sign.

The head unit 30 comprises a data processing unit 45 which is connected to the pattern recognition unit 44, a translation module 13, a data storage device 46, a vehicle position determination means 43 for determining the position of the vehicle based on the signals received from a GPS module 32, an information sign position determination means 42 for determining the position of an information sign which has been detected within the images obtained by the digital video cameras 31a and 31 b, as described below, and a navigation module 47. The main purpose of the navigation module 47 is the calculation of a driving route using map data of an area where the driver is travelling which is stored in the map data storage device 48 (e.g. a CD-ROM) and the current position of the vehicle as determined by the vehicle position determination means 43 in response to an input of a final destination by the driver and to output driving recommendations to the driver in dependence of the current position of the moving vehicle according to known principles of vehicle navigation.

The data processing unit 45 serves as a data processing unit, e.g, for comparing data or transmitting data between the components 13,42-44 and 46-48 according to predetermined sequences defined by the respective software module and/or control by the user.

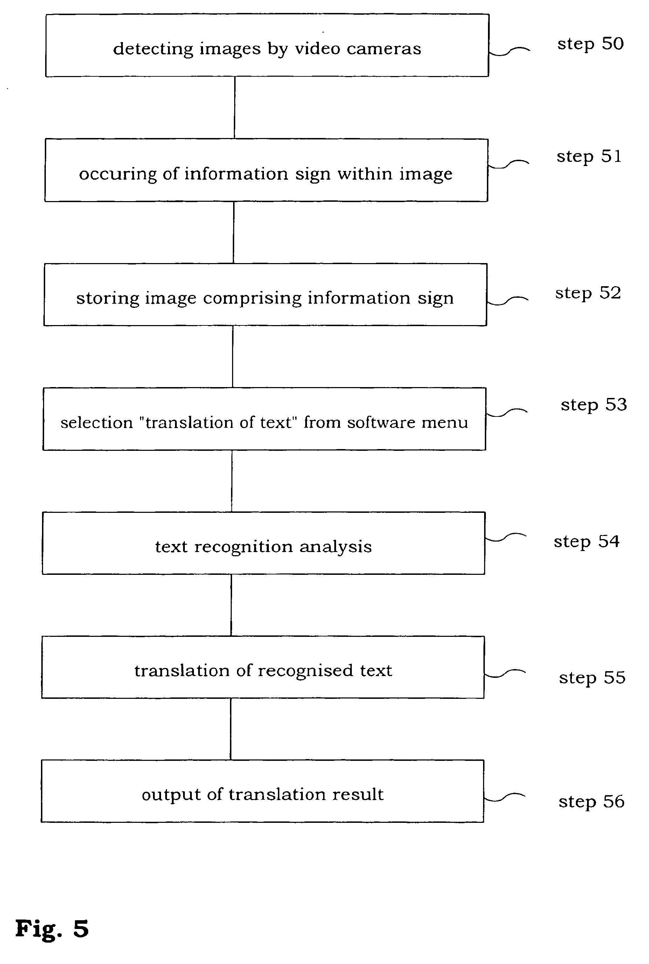

An embodiment of the method for outputting information to a driver of a vehicle using the system shown in Figs. 3 and 4 is described in the following with reference to Fig. 5. A vehicle comprising a computer-based system 3 shown in Figs. 3 and 4 is travelling along an Italian highway (A22 named "Autostrada del Brennero"), for example. The video cameras 31a and 31b in step 50 are continuously monitoring the ambience of the highway lying in front of the vehicle. That is, their images may include a portion of the field of view of the driver. The detected images are continuously displayed on the display 15 of the computer-based system 30 during the drive.

As the vehicle advances, in step 51 within the image currently monitored by the video cameras 31a, 31b an information sign of a traffic guidance system installed over the highway occurs displaying the traffic information "10 CHILOMETRI DI COLONNA DALLO SVINCOLO DI CARPI ALL'ALLACCIAMENTO DELL'A1". When the driver notices the information sign he selects the item "storing image" in step 52 from the software menu, and in step 53 the item "translation of text". This translation command may be simply entered by finger tapping on the information sign of the image, if the display 15 is constituted by a touch screen.

Thereafter, in step 54, a text recognition analysis is performed of the entire image stored in step 52 which may include not only the information sign, but also the highway, other cars driving in front of the vehicle, the heaven above the highway etc., by the text recognition module 44a for recognizing and extracting the above text content of the information sign of the image stored by the user in step 52. In step 55, the identified text of the information sign received from the text recognition module 44a of the pattern recognition module 44 is translated by the language translation module 13 by retrieving the German translation of the Italian text of the image recorded by the driver. A word-per-word translation of the text "10 KM VON STAU VON AUSFAHRT VON CARPI BIS ANSCHLUSS DER A1" is output in step 56 visually on the display 15 as well as acoustically via the loudspeakers 16, after a text-to-speech conversion as described above with reference to Figs. 1 and 2. The output on the display may be performed by superimposing the translation result over the original Italian text within the image of the information sign or in a separate window opened automatically on the display 15.

Since in the present embodiment the language translation module 13 is connected to the vehicle position determination module 43, from the current position of the vehicle the input language is derived automatically by the language translation module 13. Therefore, it is not necessary for the driver to specify the input language of the translation by a further input command. Since the relevant data of the data base 18b to be searched for translation can be significantly narrowed down to only one language to be searched, the data processing for translation is substantially accelerated. Of course, the input language as well as the output language may be preset by the driver.

The system according to the second embodiment of the invention shown in Figs. 3 and 4 enables the driver to easily translate information signs installed in the area where she/he is currently travelling. The translation result can be stored in the storage device 46 of the computer-based system 30, so that the driver may invoke the information given by the road or information signs at any time during the trip for information purposes, for example as a reminder. Thereby, the information status of the driver travelling abroad can be significantly enhanced. Since there is no need for the driver to remember a text comprising several words of a foreign language he is not familiar with, she/he can concentrate on driving and, thus, the driving security is significantly increased. Due to the possibility of performing an instantaneous translation, there it is no need for any time-consuming stopover for searching any conventional dictionary.

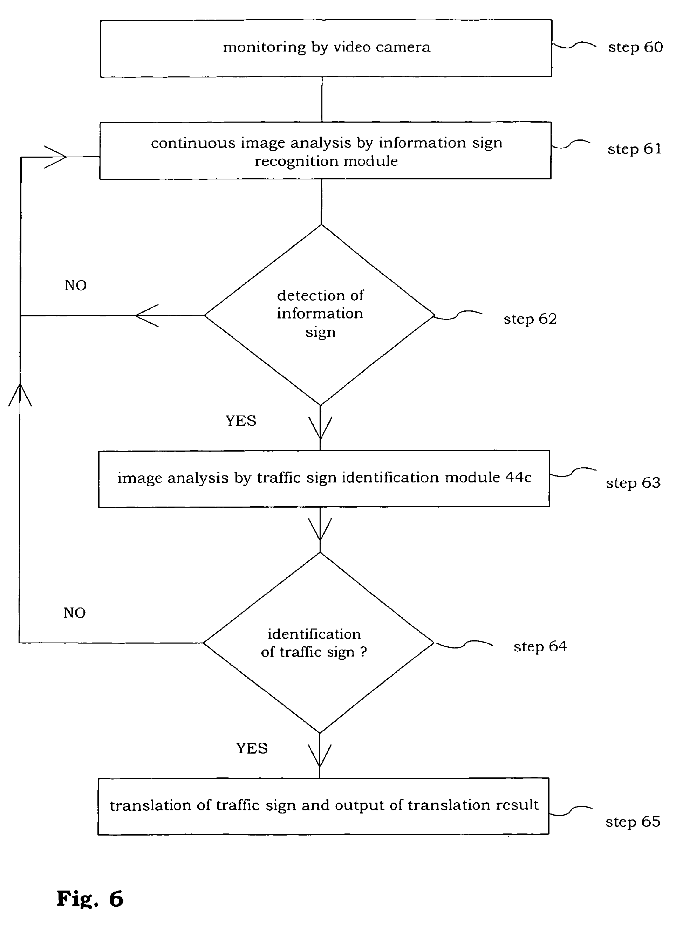

As mentioned above, the translation function of the system according to the invention is not restricted to language translation but also includes the translation of traffic signs located, e.g., besides the highway. An example of a procedure for identifying and translating a traffic sign in a foreign country by use of the system shown in Figs. 3 and 4 will be explained in the following with reference to Fig. 6.

In step 60 the ambience of the vehicle travelling abroad, e.g. in Egypt, is monitored by any of the video cameras 31a, 31b. The image detected by the video camera is continuously analysed by the information sign recognition module 44a of the pattern recognition unit 44 for recognising an information sign in step 61 on the basis of its dimensions and shape by comparison with data stored in the information and traffic sign storage device 44d. As long as no information sign is detected, the procedure continues by returning to step 60. If an information sign is detected by the information sign detection module 44a in step 62, in step 63 the image data of the information sign is transmitted to the traffic sign identification module 44c where a further image analysis is performed by comparing the elements of the image with characteristic elements of official traffic signs of the respective country (i.e. Egypt in the present example) which are stored in the information and traffic sign storage device 44d.

Since, as shown for example in the present embodiment, data can be exchanged between the traffic sign identification module 44c and the vehicle position determination module 43 by means of the data processing unit 45, from the current position of the vehicle, i.e., from the determination of the country where the vehicle is currently travelling, the relevant group of traffic signs can be narrowed down automatically by reducing them to those of Egypt (in the present example) before performing the traffic sign identification procedure. Thereby, the velocity of data processing can be significantly increased.

If in step 64 a traffic sign of Egypt has been identified, the meaning of that traffic sign which is stored in the information and traffic sign storage device 44d is retrieved and output as a translation result visually on the display 14 or acoustically via the loudspeakers 15 in step 65. Alternatively or additionally to the text output, the corresponding traffic sign of the home country of the driver, e.g., the corresponding German traffic sign, may be displayed on the display 15. Otherwise, the procedure returns to step 61 if the detected information sign cannot be identified as a traffic sign by the traffic sign identification module 44c.

As becomes apparent from the foregoing description, the detection and translation of an "information sign" in the sense of the invention is not restricted to official traffic signs issued by the respective state but includes any kind of information, such as signposts describing the driving way to, for example, a hotel or any other advertisement such as sales offers and the like, which can easily be taken into account by the driver after its translation. That is, the term information sign covers official traffic signs according to the traffic regulation of the respective country, as well as any other information sign which may relate to the field of traffic or to any other information considered to be useful by the driver.

Incidentally, while the traffic sign identification module 44c and the information sign recognition module 44b are shown in Fig. 6 as separate modules, as a matter of course, there may be provided a single software module for realizing both functions.

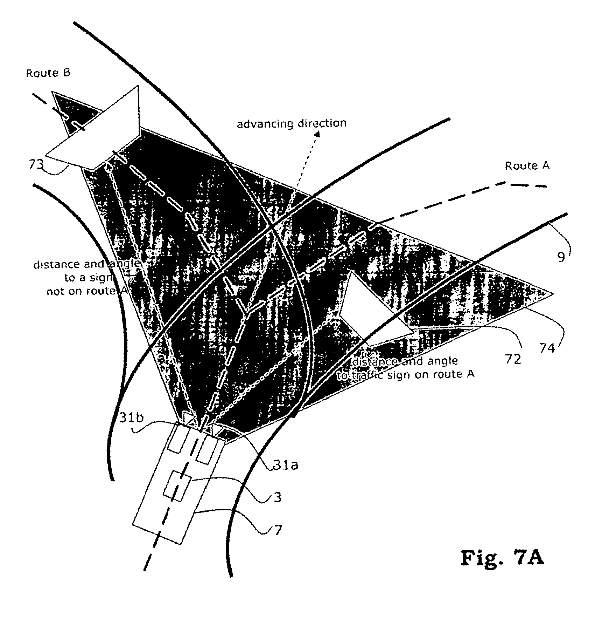

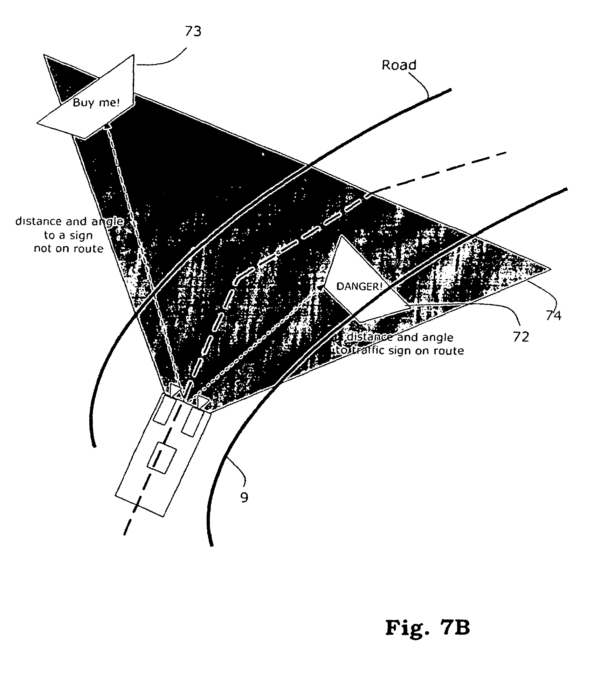

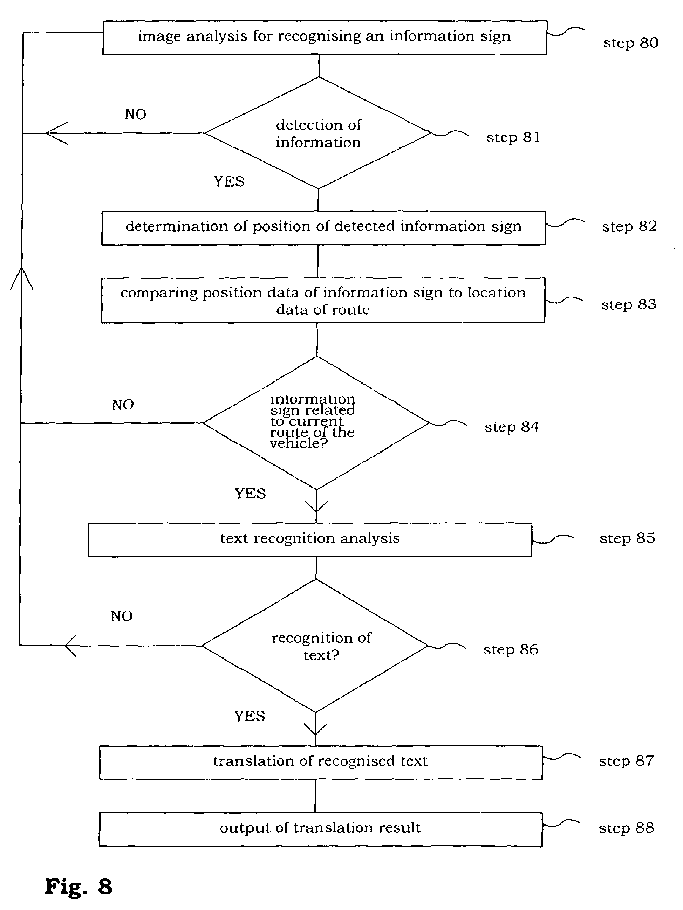

In Figs. 7A, 7B and 8 a further embodiment of the method according to the invention is shown wherein the output of translation of an information sign is performed in dependence on the position of the information sign relative to the road and/or the driving route of the vehicle.

The basic situation is schematically illustrated in Figs. 7A and 7B, respectively. A vehicle 7 equipped with a computer-based system 3 is driving on the road along a route A. At the current position of the vehicle 7 illustrated in Fig. 7A the video cameras 31a, 31 b within their monitoring field 74 detect the traffic signs 72 and 73, the first being located on the driving route A and the latter being located on the driving route B. In such a case the system and the method according to the invention enable the output of a translation of these traffic signs 72, 73 in dependence on whether the traffic sign is located on the current driving route of the vehicle or not.

An example of such a procedure will be described in the following with reference to Fig. 8. In step 80, the images obtained by the digital video cameras 31a and 31b are analyzed continuously by the information sign detection module 44b by comparing these images to the pattern data of the information and traffic sign storage device 44d. If in step 81 one of the signposts 72, 73 is detected, the position of the signposts 72, 73 in relation to the vehicle 7 is determined in step 82 by the information sign position determination module 42 on the basis of the distance of the signpost 72, 73 to the vehicle and the angles of the camera positions in relation to the information signs 72, 73. Since the position of the vehicle 7 and its advancing direction as well as the orientation of the video cameras 31a, 31b with reference to the vehicle 7 are known, it is possible to exactly calculate the absolute position of the information sign signposts 72, 73 according to the known principles of photogrammetry, in particular stereo analysis based on two images, as described, for example, in "Photogrammetrie" by Kraus, K., Dümmler Verlag, Bonn 1997.

Incidentally, while the embodiment of the computer-based system according to the invention shown in Fig. 3 comprises a pair of video cameras 31a, 31b, also a single camera may be used, in particular if position data at the information sign is included by map data of the respective area. Furthermore, the position of the information may also be determined by use of a 3D laser sensor.

In step 83, the calculated position data of the information signs 72, 73 are compared to location data of the driving routes A, B of the vehicle 7 obtained from the navigation module 47 by the data processing unit 45, and the distance between the road according to route A and the information signs 72, 73 is determined. Based on this result in step 74 it is evaluated whether the signposts are 72, 73 are related to the current driving route of the vehicle or not. In the exemplary case illustrated in Fig. 7 it is found that information sign 72 is related to the current driving route A of vehicle 7, whereas information sign 73 is not.

If the signposts 72, 73 are found to be related to the current driving route in step 84, in step 85 a text recognition analysis is performed by the text recognition module 44a of the pattern recognition unit 44, and, if any text is recognised by the text recognition module 44a in step 86, the recognised text is transmitted to the language translation module 13 for translation. In step 87 the translation retrieved from the dictionary storage means 18a by the translation module 13 is output to the driver on the display 15 or via the loudspeaker 16 in step 88, as described above with reference to Fig. 5.

While the embodiment of Fig. 8 has been described as a procedure for translating text of an information sign 72, 73, the invention is not restricted to this embodiment and further provides an embodiment wherein, instead or in addition to the recognition and translation of text, an analysis for identifying a traffic sign is performed, as described with reference to steps 63 and 64 of Fig. 6.

Instead of the determination as to whether the information relates to a driving route of the vehicle or not, it is also possible to terminate the procedure after the determination of the distance between the sign posts 72, 71 and road 9. Such a situation is illustrated in Fig. 7B. In this case performing of a translation is made dependent on the result of the determination of the distance between the sign posts 72, 73 and the road where the vehicle is travelling. This procedure is based on the assumption that traffic signs are located within a shorter distance to the road as compared to those information signs which do not represent an official traffic sign. Referring to the situation illustrated in Fig. 7B, from the short distance to the road of the information sign 72 it can be concluded that information sign 72 is a traffic sign, and, accordingly, only sign 72 is submitted to an identification analysis for translation. In contrast thereto, from the comparatively long distance between the road and the traffic sign 73 it is concluded that traffic sign 73 shown in Fig. 7B is no traffic sign, but any other information sign.

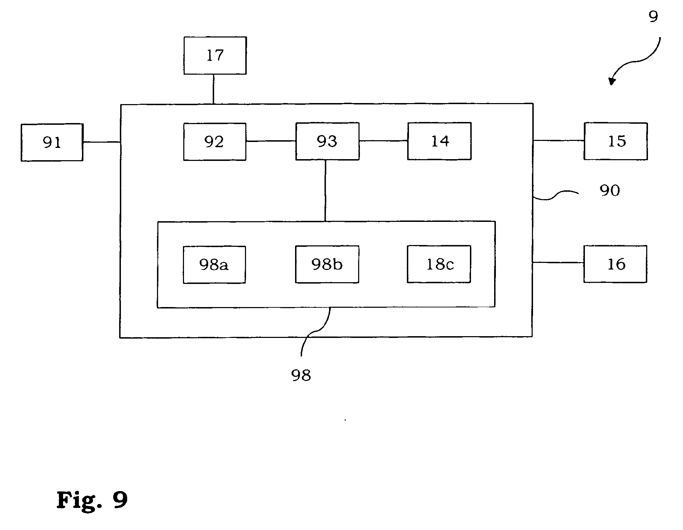

A third embodiment of a computer-based system according to the invention enabling the translation of traffic announcements received by a radio receiver is illustrated in Fig. 9. The computer-based system 9 comprises a radio receiver 91, a head unit 90, a display 15, loudspeakers 16, and a control panel 17 for controlling the head unit 90 and/or the radio receiver 91. The head unit 90 comprises a storage device 98 for storing traffic announcements received by the radio receiver 91, a speech recognition module 92 for deciphering the traffic announcement received from a broadcasting station, an automatic language translation module 93 and a text-to-speech module 14 as well as related storage devices 98a comprising data for a speech-to-text synthesis, a language data storage device 98 and a storage device 18c comprising data for a text-to-speech synthesis. The radio receiver 91 may be an analog or a digital device. The speech recognition module 92 may be adapted thereto comprising an A/D converter or not.

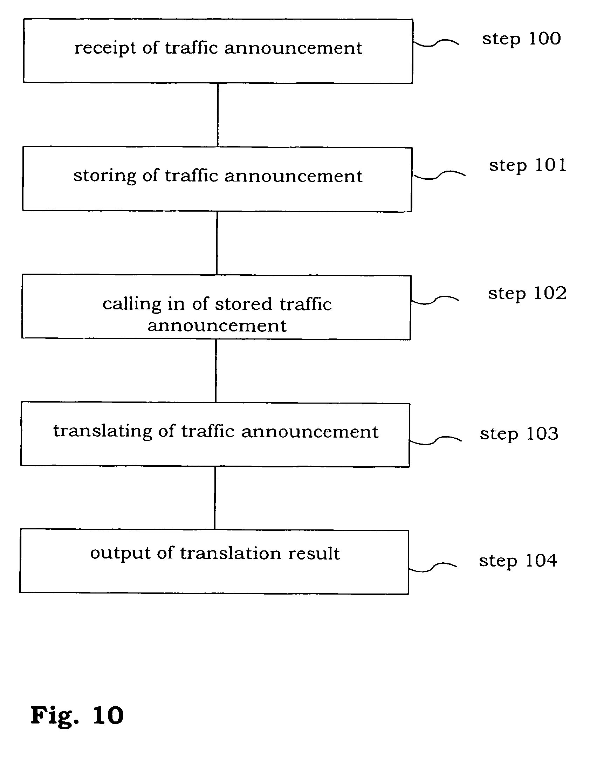

An example of a method for providing information to a driver of a vehicle using the computer-based system 9 shown in Fig. 9 is illustrated in Fig. 10. In step 100, the radio receiver 91 receives a traffic announcement in a foreign language. In case the radio receiver 91 being turned off during the drive, the traffic announcements are stored in the traffic announcement storage device 98 in step 101. In step 102, the driver calls in the latest traffic announcements received by the radio receiver 91 from the traffic announcement storage device 98 by actuating a button of the control panel 17. In response thereto the requested traffic announcement is output to the driver via the loudspeaker 15. Thereafter, the driver requests a translation of the traffic announcement by selecting a corresponding item of the software menu shown on the display by means of the control panel. In response thereto, the traffic announcement data is transmitted to the automatic language translation module 93. In step 103 the received traffic announcement is translated by the language translation module 93 and the translation of the traffic announcement into the German language is output to the driver in step 104 on the display 16 as a text and/or after a TTS conversion by the TTS module 14 via the loudspeakers 15 of the audio system.

According to the embodiment shown in Fig. 10, the driver of a vehicle travelling in a foreign country is capable to translate traffic announcements received in foreign languages resulting in a significantly increased information level as regards the latest traffic events.

The invention as defined by the appended claims is not restricted to the particular configurations of embodiments of the computer-based systems 1, 3 and 9 described above. On the contrary, as it is understood by a person skilled in the art, the individual components of these systems may be combined in any suitable manner to put the invention to practice according to the respective demands of the user. For example, even if not shown in Fig. 9, the computer-based system 9 may also comprise the components of the computer-based system 1 and 3 shown in Figs. 1 and 3, such as a microphone 11 for speech input by the driver, a navigation module 47, video cameras 31a and 31b and a pattern recognition module 34 etc., and vice versa.

Of course, the same applies to the steps of the method according to the invention. For example, the procedures for determining whether the traffic sign is located on the driving route of the vehicle according to Fig. 8 may be combined with the procedure for identifying a traffic sign according to Fig. 6, so that, before the identification of a foreign traffic sign is performed, it is checked whether this traffic sign is located on the driving route of the driver or not.

## Claims

1. Computer-based system for outputting information to a driver of a vehicle, said system (1; 3; 9) being adapted to be mounted in a vehicle (7), comprising
a translation means (13; 93) having
- storage means (18b; 98; 44d) for storing a plurality of first information data and a plurality of second information data, said second information data being related to said first information data comprising a translation thereof,
- input means (11, 13, 17; 31a, 31b; 91) for inputting first information data into said computer-based system (1; 3; 9), said input means comprising a digital photo and/or video camera (31a, 31b) and means for pattern recognition (44) of an image taken by said digital photo and/or video camera (31a, 31b), said means for pattern recognition (44) comprising means (44c) for identifying a traffic sign including a traffic sign image storage means (44d) for storing image elements of traffic signs of different countries,
- data processing means (45) for retrieving second information data on the basis of said input first information data from said data storage means (18b; 98), and
- output means for (14, 15, 16) outputting said retrieved second information data to said driver, the system further comprising a position determination means (32) for determining the position of the vehicle (7), **characterized by** further comprising
- means for determining the advancing direction of the vehicle (7) and navigation means (47) for calculating a driving route to a destination input by said driver,
- decision means for deciding whether said traffic sign identified by said identifying means (44c) is output to said driver or not, wherein said decision means comprises comparing means for determining whether said traffic sign detected by said camera (31a, 31b) is on the driving route of said vehicle (7) and/or within a predetermined distance to the road where said vehicle (7) is currently driving or not.

2. System according to claim 1, **characterized in that** said translation means comprises a language translation means (13) for translating a word of a first language into a word of a second language.

3. System according to claim 1 or 2, **characterized in that** said language translation means (13) comprises an automatic language translation means (93) for a context related translation of a phrase or a sentence of said first language into a phrase or a sentence of said second language.

4. System according to any of the preceding claims, **characterized in that** said translation means (13; 93) comprises a traffic sign translation means (13; 44) for translating a traffic sign (72, 73) by outputting information data relating to the meaning of said traffic sign (72, 73).

5. System according to claim 4, **characterized in that** translation is performed by outputting a description of the meaning of said traffic sign (72, 73) by speech, and/or displaying a text, and/or displaying an image of the corresponding traffic sign of the home country of said driver.

6. System according to any of the preceding claims, **characterized in that** said output means comprises means for a text-to-speech conversion (14).

7. System according to claim any of the of the preceding claims, **characterized in that** said input means comprises a microphone (11) and means for speech recognition (12) connected to said microphone (11).

8. System according to any of the preceding claims, **characterized in that** said input means comprises a joystick, keyboard, shaft encoder and/or a touch screen.

9. System according to any of the preceding claims, **characterized in that** said input means comprises means (91) for providing traffic and/or travel information from an external information source.

10. System according to any of the preceding claims, **characterized by** means for pattern recognition (44) comprising means (44b) for recognition of an information sign.

11. System according to any of the preceding claims, **characterized by** means (42) for determining a position of an information sign within the ambiance of the vehicle (7).

12. System according to any of the preceding claims, **characterized in that** said means (44) for pattern recognition further comprising means (44a) for text recognition.

13. System according to any of the preceding claims, **characterized by** a translation setting means for automatically setting an input language in dependence of the position determined by said position determination means (32).

14. System according to any of claims 2 to 13, **characterized by** a radio receiver (91) for receiving traffic and/or travel announcements comprising words of said first language.

15. System according to any of claims 2 to 14, **characterized by** a telematic unit for receiving terms of said first language.

16. Navigation system for a vehicle **characterized by** a system according to any of the preceding claims.

17. Method for outputting information to a driver of a vehicle, comprising the steps of:
- inputting first information data into a translation means (13; 93) a computer-based system (1; 3; 9) adapted to be mounted in a vehicle (7),
- retrieving second information data from a storage means (18b; 44d; 98) for storing a plurality of first information data and a plurality of second information data, said second information data being related to said first information data comprising a translation thereof,
- outputting said retrieved second information data to said driver,
- monitoring the ambience of a vehicle by means of a video camera (31a, 31b), and
- continuously performing a pattern recognition analysis of an image taken by said video camera (31a, 31b) for detecting traffic sign (72, 73),
**characterized by** the further steps of
- detecting the position of said vehicle (7),
- detecting a position of said traffic sign (72, 73) relative to said vehicle (7),
- determining the absolute position of said traffic sign from said position of said vehicle (7) and said relative position of said traffic sign (72, 73),
- comparing the position of said traffic sign and position data of said road where said vehicle is located, and
- performing a translation of said traffic sign, when said traffic sign is located within a predetermined distance to said road.

18. Method for outputting information to a driver of a vehicle according to claim 17, **characterized in that** the step of inputting comprises detecting or receiving said first information data from an external information source (91).

19. Method for outputting information to a driver of a vehicle according to claim 17, **characterized by** performing a pattern recognition analysis of said image of an detected information sign (72, 73) for identifying a traffic sign of the country where the vehicle is travelling, if an information sign (72, 73) has been detected.

20. Method for outputting information to a driver of a vehicle according to claim 19, **characterized by** the further step of outputting an image of a corresponding traffic sign of the home country of said driver on a display (16), if a traffic sign has been identified.

21. Method for outputting information to a driver of a vehicle according to claim 19 or 20, **characterized by** the further step of outputting a text information in a second language concerning the meaning of said traffic sign, if a traffic sign has been identified.

22. Method for outputting information to a driver of a vehicle according to any of claims 17 to 21,
**characterized by** the further steps of
- performing a text recognition analysis of said image of said information sign, and
- inputting any text obtained from said text recognition analysis into said language translation means for translation.

23. Method for outputting information to a driver of a vehicle according to any of claims 17 to 22,
**characterized by** the further steps of
- determining a driving route of said vehicle (7) in response to an input of a final destination by said driver,
- detecting a position of said vehicle (7),
- detecting a position of an information sign (72, 73) with respect to said vehicle (7),
- determining the absolute position of said information sign (72, 73) from said position of said vehicle (7) and said relative position of said information sign (72, 73),
- comparing the position of said information sign (72, 73) and location data of said determined driving route of said vehicle (7), and
- performing a translation of said information sign (72, 73) if said information sign (72, 73) is located within a predetermined distance to the road of said route.

24. Method for outputting information to a driver of a vehicle according to any of claims 17 to 23,
**characterized by** the steps of
- receiving first information data comprising a traffic announcement from a broadcasting station,
- storing said received first information data,
- performing a speech recognition analysis of said received data,
- translating said traffic announcement, and
- outputting a translation of said traffic announcement to said driver.

## Patentansprüche

1. Computerbasiertes System zum Ausgeben einer Information an einen Fahrer eines Fahrzeugs, wobei das System (1; 3; 9) ausgestaltet ist, in einem Fahrzeug (7) angebracht zu werden, umfassend
ein Übersetzungsmittel (13; 93) mit
- einem Speichermittel (18b; 98; 44d) zum Speichern mehrerer erster Informationsdaten und mehrerer zweiter Informationsdaten, wobei die zweiten Informationsdaten, welche auf die ersten Informationsdaten bezogen sind, eine Übersetzung davon umfassen,
- einem Eingabemittel (11, 13, 17; 31a, 31b; 91) zum Eingeben erster Informationsdaten in das computerbasierte System (1; 3; 9), wobei das Eingabemittel eine digitale Foto- und/oder Videokamera (31a, 31b) und ein Mittel für eine Mustererkennung (44) eines von der digitalen Foto- und/oder Videokamera (31a, 31b) aufgenommenen Bildes umfasst, wobei das Mittel zur Mustererkennung (44) ein Mittel (44c) zum Erkennen eines Verkehrszeichens umfasst, welches ein Verkehrszeichenbildspeichermittel (44d) zum Speichern von Bildelementen von Verkehrszeichen von unterschiedlichen Ländern aufweist,
- einem Datenverarbeitungsmittel (45) zum Abfragen von zweiten Informationsdaten auf der Grundlage von den eingegebenen ersten Informationsdaten aus dem Datenspeichermittel (18b; 98), und
- einem Ausgabemittel (14, 15, 16) zum Ausgeben der abgefragten zweiten Informationsdaten an den Fahrer, wobei das System ferner ein Positionsbestimmungsmittel (32) zum Bestimmen der Position des Fahrzeugs (7) umfasst, **gekennzeichnet durch** ein weiteres Umfassen von
- einem Mittel zum Bestimmen der Bewegungsrichtung des Fahrzeugs (7) und einem Navigationsmittel (47) zum Berechnen einer Fahrstrecke zu einem von dem Fahrer eingegebenen Ziel,
- einem Entscheidungsmittel zum Entscheiden, ob das von dem Erkennungsmittel (44c) erkannte Verkehrszeichen zu dem Fahrer ausgegeben wird oder nicht,
- wobei das Entscheidungsmittel ein Vergleichsmittel zum Bestimmen, ob das von der Kamera (31a, 31b) erfasste Verkehrszeichen auf der Fahrstrecke des Fahrzeugs (7) und/oder innerhalb einer vorbestimmten Entfernung zu der Straße, wo das Fahrzeug (7) gegenwärtig fährt, ist oder nicht, umfasst.

2. System nach Anspruch 1, **dadurch gekennzeichnet, dass** das Übersetzungsmittel ein Sprachübersetzungsmittel (13) zum Übersetzen eines Wortes einer ersten Sprache in ein Wort einer zweiten Sprache umfasst.

3. System nach Anspruch 1 oder 2, **dadurch gekennzeichnet, dass** das Sprachübersetzungsmittel (13) ein automatisches Sprachübersetzungsmittel (93) für eine kontextbezogene Übersetzung eines Ausdrucks oder eines Satzes der ersten Sprache in einen Ausdruck oder einen Satz der zweiten Sprache umfasst.

4. System nach einem der vorhergehenden Ansprüche, **dadurch gekennzeichnet, dass** das Übersetzungsmittel (13; 93) ein Verkehrszeichenübersetzungsmittel (13; 44) zum Übersetzen eines Verkehrszeichens (72, 73) durch Ausgeben von Informationsdaten, welche die Bedeutung des Verkehrszeichens (72, 73) betreffen, umfasst.

5. System nach Anspruch 4, **dadurch gekennzeichnet, dass** eine Übersetzung durch Ausgeben einer Beschreibung der Bedeutung des Verkehrszeichens (72, 73) durch Sprache und/oder Anzeigen eines Textes und/oder Anzeigen eines Bildes des entsprechenden Verkehrszeichens des Heimatlandes des Fahrers durchgeführt wird.

6. System nach einem der vorhergehenden Ansprüche, **dadurch gekennzeichnet, dass** das Ausgabemittel ein Mittel für eine Text/Sprachumwandlung (14) umfasst.

7. System nach einem der vorhergehenden Ansprüche, **dadurch gekennzeichnet, dass** das Eingabemittel ein Mikrophon (11) und ein Mittel für eine Spracherkennung (12), welches mit dem Mikrofon (11) verbunden ist, umfasst.

8. System nach einem der vorhergehenden Ansprüche, **dadurch gekennzeichnet, dass** das Eingabemittel einen Steuerhebel, eine Tastatur, einen Drehgeber und/oder einen Sensorbildschirm umfasst.

9. System nach einem der vorhergehenden Ansprüche, **dadurch gekennzeichnet, dass** das Eingabemittel ein Mittel (91) zum Bereitstellen von Verkehrs- und/oder Reiseinformationen von einer externen Informationsquelle umfasst.

10. System nach einem der vorhergehenden Ansprüche, **gekennzeichnet durch** ein Mittel zur Mustererkennung (44), welches ein Mittel (44b) zum Erkennen eines Informationszeichens umfasst.

11. System nach einem der vorhergehenden Ansprüche, **gekennzeichnet durch** ein Mittel (42) zum Bestimmen einer Position eines Informationszeichens innerhalb der Umgebung des Fahrzeugs (7).

12. System nach einem der vorhergehenden Ansprüche, **dadurch gekennzeichnet, dass** das Mittel (44) für eine Mustererkennung ferner ein Mittel (44a) für eine Texterkennung umfasst.

13. System nach einem der vorhergehenden Ansprüche, **gekennzeichnet durch** ein Übersetzungseinstellmittel zum automatischen Einstellen einer Eingabesprache in Abhängigkeit von der durch das Positionsbestimmungsmittel (32) bestimmten Position.

14. System nach einem der Ansprüche 2 bis 13, **gekennzeichnet durch** einen Radioempfänger (91) zum Empfangen von Verkehrs- und/oder Reisenachrichten, welche Worte der ersten Sprache umfassen.

15. System nach einem der Ansprüche 2 bis 14, **gekennzeichnet durch** eine Telematikeinheit zum Empfangen von Begriffen der ersten Sprache.

16. Navigationssystem für ein Fahrzeug, **gekennzeichnet durch** ein System nach einem der vorhergehenden Ansprüche.

17. Verfahren zum Ausgeben einer Information an einen Fahrer eines Fahrzeugs, welches die Schritte umfasst:
- Eingeben erster Informationsdaten in ein Übersetzungsmittel (13; 93) eines computerbasierten Systems (1; 3; 9), welches ausgestaltet ist, in einem Fahrzeug (7) angebracht zu werden,
- Abfragen zweiter Informationsdaten von einem Speichermittel (18b; 44d; 98) zum Speichern mehrerer erster Informationsdaten und mehrerer zweiter Informationsdaten, wobei die zweiten Informationsdaten in Bezug zu den ersten Informationsdaten sind, welche eine Übersetzung davon umfassen,
- Ausgeben der abgefragten zweiten Informationsdaten zu dem Fahrer,
- Überwachen der Umgebung eines Fahrzeugs mittels einer Videokamera (31a, 31b) und
- fortlaufendes Durchführen einer Mustererkennungsanalyse eines von der Videokamera (31a, 31b) aufgenommenen Bildes zum Erfassen eines Verkehrszeichens (72, 73), **gekennzeichnet durch** die weiteren Schritte
- Erfassen der Position des Fahrzeugs (7),
- Erfassen einer Position des Verkehrszeichens (72, 73) relativ zu dem Fahrzeug (7),
- Bestimmen der absoluten Position des Verkehrszeichens aus der Position des Fahrzeugs (7) und der relativen Position des Verkehrszeichens (72, 73),
- Vergleichen der Position des Verkehrszeichens und,Positionsdaten der Straße, wo das Fahrzeug angeordnet ist, und
- Durchführen einer Übersetzung des Verkehrszeichens, wenn das Verkehrszeichen innerhalb einer vorbestimmten Entfernung zu der Straße angeordnet ist.

18. Verfahren zum Ausgeben einer Information an einen Fahrer eines Fahrzeugs gemäß Anspruch 17, **dadurch gekennzeichnet, dass** der Schritt des Eingebens ein Erfassen oder Empfangen der ersten Informationsdaten von einer externen Informationsquelle (91) umfasst.

19. Verfahren zum Ausgeben einer Information an einen Fahrer eines Fahrzeugs nach Anspruch 17, **gekennzeichnet durch** ein Durchführen einer Mustererkennungsanalyse des Bildes eines erfassten Informationszeichens (72, 73) zum Bestimmen eines Verkehrszeichens des Landes, wo sich das Fahrzeug bewegt, wenn ein Informationszeichen (72, 73) erfasst wurde.

20. Verfahren zum Ausgeben einer Information an einen Fahrer eines Fahrzeugs nach Anspruch 19, **gekennzeichnet durch** den weiteren Schritt eines Ausgebens eines Bildes eines entsprechenden Verkehrszeichens des Heimatlandes des Fahrers auf einer Anzeige (16), wenn ein Verkehrszeichen bestimmt wurde.

21. Verfahren zum Ausgeben einer Information an einen Fahrer eines Fahrzeugs nach Anspruch 19 oder 20, **gekennzeichnet durch** den weiteren Schritt eines Ausgebens einer Textinformation in einer zweiten Sprache, welche die Bedeutung des Verkehrszeichens betrifft, wenn ein Verkehrszeichen bestimmt wurde.

22. Verfahren zum Ausgeben einer Information an einen Fahrer eines Fahrzeugs nach einem der Ansprüche 17 bis 21, **gekennzeichnet durch** die weiteren Schritte
- Durchführen einer Texterkennungsanalyse des Bildes des Informationszeichens und
- Eingeben eines beliebigen von der Texterkennungsanalyse gewonnenen Textes in das Sprachübersetzungsmittel für eine Übersetzung.

23. Verfahren zum Ausgeben einer Information an einen Fahrer eines Fahrzeugs nach einem der Ansprüche 17 bis 22, **gekennzeichnet durch** die weiteren Schritte
- Bestimmen einer Fahrstrecke des Fahrzeugs (7) in Abhängigkeit einer Eingabe eines endgültigen Ziels des Fahrers,
- Erfassen einer Position des Fahrzeugs (7),
- Erfassen einer Position eines Informationszeichens (72, 73) bezogen auf das Fahrzeug (7),
- Bestimmen der absoluten Position des Informationszeichens (72, 73) aus der Position des Fahrzeugs (7) und der relativen Position des Informationszeichens (72, 73),
- Vergleichen der Position des Informationszeichens (72, 73) und Ortsdaten der bestimmten Fahrstrecke des Fahrzeugs (7) und
- Durchführen einer Übersetzung des Informationszeichens (72, 73), wenn das Informationszeichen (72, 73) innerhalb einer vorbestimmten Entfernung zu der Straße der Strecke angeordnet ist.

24. Verfahren zum Ausgeben einer Information an einen Fahrer eines Fahrzeugs nach einem der Ansprüche 17 bis 23, **gekennzeichnet durch** die Schritte
- Empfangen erster Informationsdaten, welche eine Verkehrsnachricht von einer Rundfunkstation umfassen,
- Speichern der empfangenen ersten Informationsdaten,
- Durchführen einer Spracherkennungsanalyse der empfangenen Daten,
- Übersetzen der Verkehrsnachricht und
- Ausgeben einer Übersetzung der Verkehrsnachricht an den Fahrer.

## Revendications

1. Système à base d'ordinateur pour émettre en sortie des informations vers un conducteur d'un véhicule, ledit système (1 ; 3 ; 9) étant adapté à être monté dans un véhicule (7) comprenant :
un moyen de traduction (13 ; 93) ayant
- des moyens de stockage (18b ; 98 ; 44d) pour stocker une pluralité de premières données d'informations et une pluralité de deuxièmes données d'informations, lesdites deuxièmes données d'informations étant associées auxdites premières données d'informations comprenant une traduction de celles-ci,
- des moyens d'entrée (11, 13, 17 ; 31a, 31b ; 91) pour entrer des premières données d'informations dans ledit système à base d'ordinateur (1 ; 3 ; 9) lesdits moyens d'entrée comprenant une caméra photo et/ou vidéo numérique (31a, 31b) et des moyens pour une reconnaissance de modèle (44) d'une image prise par ladite caméra photo et/ou vidéo numérique (31 a, 31 b), lesdits moyens pour la reconnaissance de modèle (44) comprenant des moyens (44c) pour identifier un panneau routier comprenant un moyen de stockage d'image de panneau routier (44d) pour stocker des éléments d'images de panneaux routiers de différents pays,
- des moyens de traitement de données (45) pour récupérer des deuxièmes données d'informations sur la base desdites premières données d'informations entrées à partir desdits moyens de stockage de données (18b ; 98) et
- des moyens de sortie (14, 15, 16) pour émettre en sortie lesdites deuxièmes données d'informations récupérées vers ledit conducteur, le système comprenant en outre un moyen de détermination de position (32) pour déterminer la position du véhicule (7), **caractérisé en qu'**il comprend en outre
- des moyens pour déterminer la direction d'avancée du véhicule (7) et des moyens de navigation (47) pour calculer un trajet vers une destination entrée par ledit conducteur,
- des moyens de décision pour décider si ledit panneau routier identifié par lesdits moyens d'identification (44c) est émis en sortie vers ledit conducteur ou non, dans lequel lesdits moyens de décision comprennent des moyens de comparaison pour déterminer si ledit panneau routier détecté par ladite caméra (31a, 31b) se trouve sur le trajet dudit véhicule (7) et/ou à l'intérieur d'une distance prédéterminée vers la route sur laquelle ledit véhicule (7) roule actuellement ou non.

2. Système selon la revendication 1, **caractérisé en ce que** lesdits moyens de traduction comprennent un moyen de traduction de langue (13) pour traduire un mot d'une première langue en un mot d'une deuxième langue.

3. Système selon la revendication 1 ou 2, **caractérisé en ce que** ledit moyen de traduction de langue (13) comprend un moyen de traduction de langue automatique (93) pour une traduction associée au contexte d'un groupe de mots ou d'une phrase de ladite première langue en un groupe de mots ou une phrase de ladite deuxième langue.

4. Système selon l'une quelconque des revendications précédentes, **caractérisé en ce que** lesdits moyens de traduction (13 ; 93) comprennent un moyen de traduction de panneau routier (13 ; 44) pour traduire un panneau routier (72 ; 73) en émettant en sortie des données d'informations associées à la signification dudit panneau routier (72 ; 73).

5. Système selon la revendication 4, **caractérisé en ce que** ladite traduction est réalisée en émettant en sortie une description de la signification dudit panneau routier (72 ; 73) par des paroles et/ou en affichant un texte et/ou en affichant une image du panneau routier correspondant du pays d'origine dudit conducteur.

6. Système selon l'une quelconque des revendications précédentes, **caractérisé en ce que** lesdits moyens de sortie comprennent des moyens pour une conversion de textes en paroles (14).

7. Système selon l'une quelconque des revendications précédentes, **caractérisé en ce que** lesdits moyens d'entrée comprennent un microphone (11) et un moyen pour la reconnaissance vocale (12) connecté audit microphone (11).

8. Système selon l'une quelconque des revendications précédentes, **caractérisé en ce que** lesdits moyens d'entrée comprennent un joystick, un clavier, un codeur à arbre et/ou un écran tactile.

9. Système selon l'une quelconque des revendications précédentes, **caractérisé en que** lesdits moyens d'entrée comprennent des moyens (91) pour produire des informations de circulation et/ou de déplacement provenant d'une source d'informations externe.

10. Système selon l'une quelconque des revendications précédentes, **caractérisé par** des moyens pour la reconnaissance de modèles (44) qui comprennent des moyens (44b) pour la reconnaissance d'un panneau d'informations.

11. Système selon l'une quelconque des revendications précédentes, **caractérisé par** des moyens (42) pour déterminer une position d'un panneau d'informations à l'intérieur de l'ambiance du véhicule (7).

12. Système selon l'une quelconque des revendications précédentes, **caractérisé en que** lesdits moyens (44) pour la reconnaissance de modèles comprennent en outre des moyens (44a) pour la reconnaissance de textes.

13. Système selon l'une quelconque des revendications précédentes, **caractérisé par** un moyen de réglage de traduction pour régler automatiquement une langue d'entrée en fonction de la position déterminée par lesdits moyens de détermination de position (32).

14. Système selon l'une quelconque des revendications 2 à 13, **caractérisé par** un récepteur radio (91) pour recevoir des annonces de circulation et/ou de déplacement comprenant des mots de ladite première langue.

15. Système selon l'une quelconque des revendications 2 à 14, **caractérisé par** une unité télématique pour recevoir des termes de ladite première langue.

16. Système de navigation pour un véhicule **caractérisé par** un système selon l'une quelconque des revendications précédentes.

17. Procédé pour émettre en sortie des informations vers un conducteur d'un véhicule, comprenant les étapes consistant à :
- entrer des premières données d'informations dans un moyen de traduction (13 ; 93) d'un système à base d'ordinateur (1 ; 3 ; 9) adapté à être monté dans un véhicule (7),
- récupérer des deuxièmes données d'informations depuis un moyen de stockage (18b ; 44d ; 98) pour stocker une pluralité de premières données d'informations et une pluralité de deuxièmes données d'informations, lesdites deuxièmes données d'informations étant associées auxdites premières données d'informations comprenant une traduction de celles-ci,
- émettre en sortie desdites deuxièmes données d'informations récupérées audit conducteur,
- surveiller l'ambiance d'un véhicule au moyen d'une caméra vidéo (31a, 31b) et
- réaliser de manière continue une analyse de reconnaissance de modèle d'une image prise par ladite caméra vidéo (31a, 31b) pour détecter un panneau routier (72, 73),
**caractérisé par** les étapes supplémentaires consistant à :
- détecter la position dudit véhicule (7),
- détecter une position dudit panneau routier (72, 73) par rapport audit véhicule (7),
- déterminer la position absolue dudit panneau routier à partir de ladite position dudit véhicule (7) et de ladite position relative dudit panneau routier (72, 73),
- comparer la position dudit panneau routier et des données de position de ladite route sur laquelle ledit véhicule est situé, et
- réaliser une traduction du panneau routier, lorsque ledit panneau routier est situé à l'intérieur d'une distance prédéterminée vers ladite route.

18. Procédé pour émettre en sortie des informations vers un conducteur d'un véhicule selon la revendication 17, **caractérisé en ce que** l'étape d'entrée comprend la détection et la réception desdites premières données d'informations depuis une source d'informations externe (91).

19. Procédé pour émettre en sortie des informations vers un conducteur de véhicule selon la revendication 17, **caractérisé par** la réalisation d'une analyse de reconnaissance de modèle de ladite image d'un panneau d'informations détecté (72, 73) pour identifier un panneau routier du pays dans lequel le véhicule se déplace, si un panneau d'informations (72, 73) a été détecté.

20. Procédé pour émettre en sortie des informations vers le conducteur d'un véhicule selon la revendication 19, **caractérisé par** l'étape supplémentaire consistant à émettre en sortie une image d'un panneau routier correspondant du pays d'origine dudit conducteur sur un affichage (16) si un panneau routier a été identifié.

21. Procédé pour émettre en sortie des informations vers un conducteur d'un véhicule selon la revendication 19 ou 20, **caractérisé par** l'étape supplémentaire consistant à émettre en sortie une information de texte dans une deuxième langue concernant la signification dudit panneau routier, si un panneau routier a été identifié.

22. Procédé pour émettre en sortie des informations pour le conducteur d'un véhicule selon l'une quelconque des revendications 17 à 21,
**caractérisé par** l'étape supplémentaire consistant à :
- réaliser une analyse de reconnaissance de texte de ladite image dudit panneau d'informations, et
- entrer tout texte obtenu par ladite analyse de reconnaissance de texte dans lesdits moyens de traduction de langue pour la traduction.

23. Procédé pour émettre en sortie des informations vers un conducteur d'un véhicule selon l'une quelconque des revendications 17 à 22,
**caractérisé par** les étapes supplémentaires consistant à :
- déterminer un trajet de conduite dudit véhicule (7) en réponse à une entrée d'une destination finale par ledit conducteur,
- détecter une position dudit véhicule (7),
- détecter une position d'un panneau d'informations (72, 73) par rapport audit véhicule (7),
- déterminer la position absolue dudit panneau d'informations (72, 73) à partir de ladite position dudit véhicule (7) et de ladite position relative du panneau d'informations (72, 73),
- comparer la position dudit panneau d'informations (72, 73) et les données de situation dudit trajet de conduite déterminé dudit véhicule (7), et
- réaliser une traduction dudit panneau d'informations (72, 73) si ledit panneau d'informations (72, 73) est situé à une distance prédéterminée de la route dudit trajet.

24. Procédé pour émettre en sortie des informations vers un conducteur d'un véhicule selon l'une quelconque des revendications 17 à 23,
**caractérisé par** les étapes consistant à :
- recevoir des premières données d'informations comprenant une annonce de circulation provenant d'une station de diffusion,
- stocker lesdites premières données d'informations reçues,
- réaliser une analyse de reconnaissance vocale desdites données reçues,
- traduire ladite annonce de circulation, et
- émettre en sortie une traduction de ladite annonce de circulation audit conducteur.
